# EUROPEAN PATENT APPLICATION

(11) **EP 3 260 393 A1**
(43) Date of publication of application: **27.12.2017**
(21) Application number: 17177286.6
(22) Date of filing: 22.06.2017
(51) Int. Cl.: B65D 81/05, B29D 22/02, B29C 65/00, F16K 15/14

(54) **INFLATABLE AIRBAG WITHOUT HEAT-RESISTING LAYER AND MANUFACTURING METHOD THEREOF**

(30) Priority: 23.06.2016 CN 201610478707
(71) Applicant: Wang, Xingming, Guangzhou City, Guangdong Province 510530 (CN)
(72) Inventor: Wang, Xingming, Guangzhou City, Guangdong Province 510530 (CN)
(74) Representative: Zaboliene, Reda

(57) **Abstract**

This invention discloses an inflatable airbag without a heat-resisting layer and its manufacturing method: t: the inflatable airbag comprises two cavity films, wherein the boundaries of the two cavity films are glued together to form an airtight space; the inflatable airbag further comprises two valve films which are arranged between the two cavity films; first heat-seal lines are arranged at top ends of the valve films; the valve films and the adjacent cavity films are glued together through the first heat-seal lines; the inflatable airbag further comprises second heat-seal lines, wherein the second heat-seal lines comprise disconnected areas and heat-pressing areas which are arranged alternately; in the heat-pressing areas of the second heat-seal lines, the two valve films and two cavity films are completely glued together; an inflation channel is formed by portions of the two cavity films above the second heat-seal lines ; a bag body is formed by portions of the two cavity films below the second heat-seal lines; in the disconnected areas of the second heat-seal lines, air inlets leading to the bag body from the inflation channel are formed between the two valve films; An inflation inlet is arranged in the inflation channel. According to the inflatable airbag of the invention, materials of an ink heat-resisting layer in the prior art are not needed cost is reduced, and meanwhile, the problem that the airbag is scrapped due to position deviation of heat-seal points is solved; after the heat-resisting layer is omitted, pollution to the environment is reduced, and production efficiency is greatly improved.

## Description

### CROSS-REFERENCE TO RELATED APPLICATIONS

This application claims priority to Chinese Application No. CN 201610478707.2 having a filing date of June 23, 2016, the entire contents of which are hereby incorporated by reference.

### FIELD OF TECHNOLOGY

The invention relates to an inflatable airbag, in particular to an inflatable airbag without a heat-resisting layer.

### BACKGROUND

Packaging airbags are mainly applied to the transportation industry; since products can bump and collide during the transportation process and consequentially can be damaged easily, it is necessary to wrap the products with vibration-proof materials when the products are loaded; inflatable airbags used for packaging are convenient to transport and can achieve a buffering function by being inflated during use, and compared with foamed plastic, the inflatable airbags are more economical and faster.

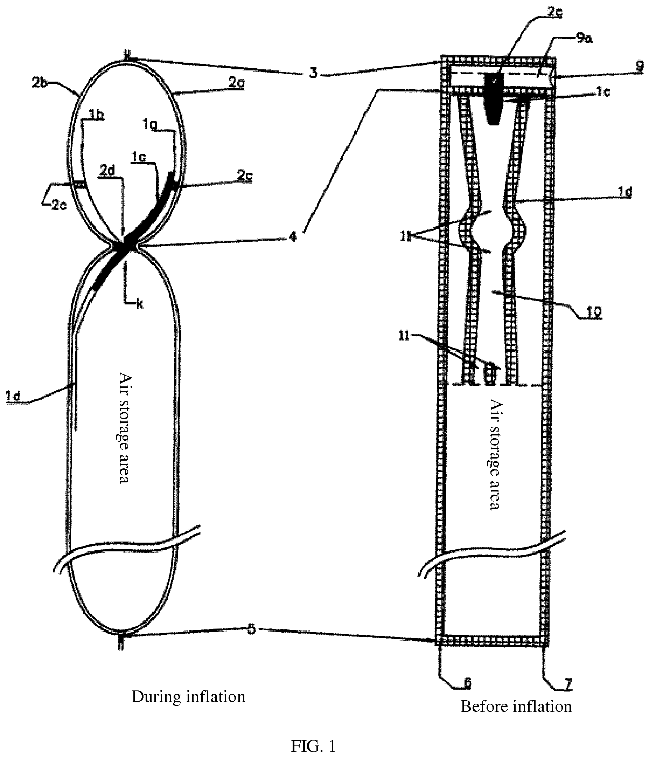

Please see FIG 1, a Chinese patent with the patent number of ZL200610067311.5 discloses a packaging airbag. According to the technical scheme, the packaging airbag comprises two outer films (2a and 2b), and two inner films (1a and 1b) are wrapped between the two outer films; a heat-resisting layer (1c) is smeared between the two inner films, heat-seal lines (4) are arranged on the isosceles portions of the outer films and the inner films, and the portions, above the heat-seal lines, of the two inner films are in heat seal with the adjacent outer films correspondingly; by applying heat-seal points (2c) between the inner films and the adjacent outer films, when an inflation channel is inflated, the two outer films are opened, the two inner films are pulled open accordingly, and thus airflow enters an air storage area. However, as for the inflatable airbag, the heat-seal points applied between the inner films and the adjacent outer films are necessary for opening the inner films so as to make the airflow enter the air storage area, and for preventing the two inner films from being glued together when the heat-seal points are applied, the heat-resisting layer needs to be smeared at an air inlet between the two inner films before the heat-seal points are applied. In the manufacturing process of the inflatable airbag, the positions of the heat-seal points are required to correspond to the position of the heat-resisting layer, high-precision manufacturing is needed, and the airbag can be scrapped once the heat-seal points are not located on the heat-resisting layer.

According to the manufacturing method of the airbag disclosed by the above patent, the heat-resisting layer needs to be smeared between the inner films to form heat-resisting joints, the heat-resisting material is not environmentally friendly, and the airbag can be scrapped once smearing is conducted on the wrong position.

### SUMMARY

In order to overcome the defects of the prior art, the present invention discloses an inflatable airbag without a heat-resisting layer: the inflatable airbag comprises two cavity films, wherein the boundaries of the two cavity films are heat-sealed and glued together to form an airtight space, and an inflation inlet is reserved in the top boundaries of the two cavity films; the inflatable airbag further comprises two valve films which are arranged between the two cavity films, wherein the valve films are shorter than the cavity films, and no heat-resisting layer is arranged between the two valve films; first heat-seal lines are arranged at top ends of the valve films; the valve films and the adjacent cavity films are glued together through the first heat-seal lines, and the two valve films are not glued together; the inflatable airbag further comprises second heat-seal lines, wherein the second heat-seal lines comprise disconnected areas and heat-pressing areas which are arranged alternately; in the heat-pressing areas of the second heat-seal lines, the two valve films and two cavity films are completely glued together; in the disconnected areas of the second heat-seal lines, the two valve films and the adjacent cavity films are glued together in a heat-seal mode correspondingly, and the two valve films are not glued together; an inflation channel is formed by portions of the two cavity films above the second heat-seal lines, and air enters the inflation channel from the inflation inlet during inflation; a bag body is formed by portions of the two cavity films below the second heat-seal lines; in the disconnected areas of the second heat-seal lines, air inlets leading to the bag body from the inflation channel are formed between the two valve films.

By the arrangement, a heat-resisting layer can be omitted, materials are saved, pollution to the environment is avoided, and meanwhile certain procedures are omitted.

Further, the first heat-seal lines are two continuous heat-seal pressing marks, the valve films and the adjacent cavity films are continuously glued together in a heat-seal mode correspondingly through the first heat-seal lines, and the valve films are not glued together. By the arrangement, air in a bag body cannot leak out from an inflation channel after the bag body is inflated.

Further, the second heat-seal lines are parallel to the first heat-seal lines. By the arrangement, pressure applied to second heat-seal lines by the air pressure in the bag body after inflation is more uniform.

Further, the positions of the second heat-seal lines overlap with the positions of the first heat-sealed lines. By the arrangement, materials can be saved, air inlets can be opened more easily during inflation, and airtightness is better.

Further, heat-bonding pressing marks are arranged in the bag body, and the two valve films and one cavity film are glued together partially through the heat-bonding pressing marks. By the arrangement, two valve films in small cavities can be better attached to cavity films, and airtightness is guaranteed.

Further, third heat-seal lines are arranged on the bag body and divide the bag body into a plurality of small cavities in the vertical direction of the cavity films. By the multiple independent small cavities, the situation that the whole airbag fails when air leakage occurs can be avoided.

Further, the third heat-seal lines intersect with the heat-pressing areas of the second heat-seal lines, and each small cavity at least comprises one of the disconnected areas of the second heat-seal lines. By the arrangement, it can be guaranteed that each small cavity at least comprises one air inlet, and thus rapid inflation is achieved.

Further, extension parts which protrude out of the first heat-seal lines are arranged at the top ends of the two valve films correspondingly and provided with extension pressing marks, the valve films and the adjacent cavity films are glued together through the extension pressing marks, and the valve films are not glued together. Extension pressing marks can be in various shapes and can be certain decorative patterns or brand LOGOs. By the arrangement, the inflation is smoother and the airbag is more attractive.

Further, the extension parts which protrude out of the first heat-seal lines are arranged at the top ends of the two valve films correspondingly, and the height of the extension part of one valve film is smaller than the width of the air inlets during inflation. By the arrangement, inflation can be smoother.

A manufacturing method for an inflatable airbag without a heat-resisting layer, characterized by comprising the following steps that:
S1, two cavity films and two valve films which are shorter than the cavity films are prepared; one cavity film is attached to one valve film, the other cavity film is attached to the other valve film, first heat-seal lines are applied to top ends of the valve films, and top end boundaries of the valve films and the cavity films are glued together through the first heat-seal lines;
S2, the two cavity films glued with the valve films from step S1 are attached, the two valve films are located between the two cavity films, heat-seal lines are then applied to the boundaries of the two cavity films, so that the boundaries of the two cavity films are glued together to form an airtight space, and an inflation inlet is reserved in the top boundaries of the two cavity films;
S3, discontinuous second heat-seal lines are applied to the areas of the valve films, and the second heat-seal lines comprise disconnected areas and heat-pressing areas which are arranged alternately; in the heat-pressing areas of the second heat-seal lines, the two valve films and two cavity films are completely glued together; in the disconnected areas of the second heat-seal lines, the two valve films and the adjacent cavity films are glued together in a heat-seal mode correspondingly, and the two valve films are not glued together; an inflation channel is formed by portions of the two cavity films above the second heat-seal lines, and air enters the inflation channel from the inflation inlet during inflation; a bag body is formed by portions of the two cavity films below the second heat-seal lines; in the disconnected areas of the second heat-seal lines, air inlets leading into the bag body from the inflation channel are formed between the two valve films.

Further, a one-time forming heat-pressing die is used when the second heat-seal lines are applied to the step S3, and the heat-pressing die is provided with male die bodies which are arranged at intervals in a protruding mode.

The present invention also disclose a manufacturing method for an inflatable airbag without a heat-resisting layer characterized by comprising the following steps that:
S1, two cavity films and two valve films which are shorter than the cavity films are prepared; one cavity film is attached to one valve film, the other cavity film is attached to the other valve film, first heat-seal lines are applied to top ends of the valve films, and top end boundaries of the valve films and the cavity films are glued together through the first heat-seal lines; heat marks are applied to lower ends of the valve films, and the two valve films and one cavity film are glued together partially through the heat marks;
S2, the cavity films glued with the valve films from step S1 are attached, and the two valve films are located between the two cavity films; discontinuous second heat-seal lines are applied to the areas of the valve films, and the second heat-seal lines comprise disconnected areas and heat-pressing areas which are arranged alternately; in the heat-pressing areas of the second heat-seal lines, the two valve films and two cavity films are completely glued together; in the disconnected areas of the second heat-seal lines, the two valve films and the adjacent cavity films are glued together in a heat-seal mode correspondingly, and the two valve films are not glued together; an inflation channel is formed by portions of the two cavity films above the second heat-seal lines, and a bag body is formed by portions of the two cavity films below the second heat-seal lines; in the disconnected areas of the second heat-seal lines, air inlets leading to the bag body from the inflation channel are formed between the two valve films;
S3, heat-seal lines are applied to boundaries of the two cavity films, so that the boundaries of the two cavity films are glued together to form an airtight space, an inflation inlet is reserved in the top boundaries of the two cavity films, and air enters the inflation channel from the inflation inlet during inflation.

According to a manufacturing method for the inflatable airbag, valve films and adjacent cavity films are glued together through first heat-seal lines firstly, and air inlets are then formed in a bag body through discontinuous second heat-seal lines, so that the step of coating a heat-resisting layer in the prior art is avoided, and manufacturing is more efficient and faster.

According to the inflatable airbag of the invention, materials of an ink heat-resisting layer in the prior art are not needed, cost is reduced, and meanwhile, the problem that the airbag is scrapped due to position deviation of heat-seal points is solved; after the heat-resisting layer is omitted, pollution to the environment is reduced, and production efficiency is greatly improved.

For better understanding and implementation, a detailed description of the invention is given with accompanying drawings as follows.

### BRIEF DESCRIPTION

FIG 1 is a schematic diagram of the prior art.
FIG 2 is a schematic diagram of the first embodiment.
FIG 3 is a sectional view of A-A in FIG 2.
FIG 4 is a sectional view of the second embodiment.
FIG 5 is a schematic diagram of the third embodiment.
FIG 6 is a schematic diagram of the fourth embodiment.
FIG 7 is a schematic diagram of the fifth embodiment.
FIG 8 is a schematic diagram of the sixth embodiment.
FIG 9 is a schematic diagram of the seventh embodiment.

### DETAILED DESCRIPTION

### First Embodiment

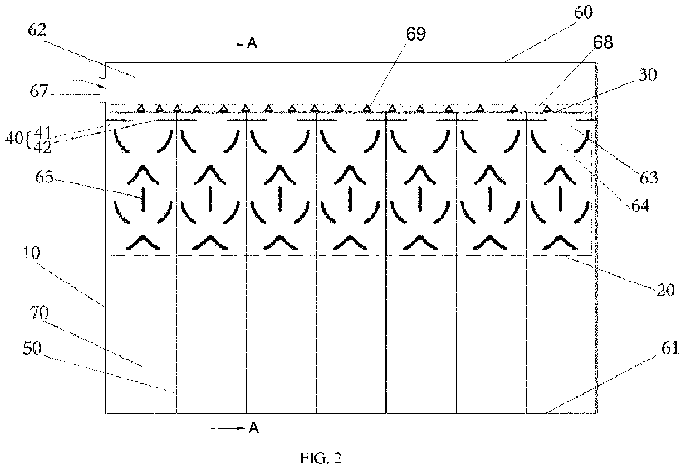

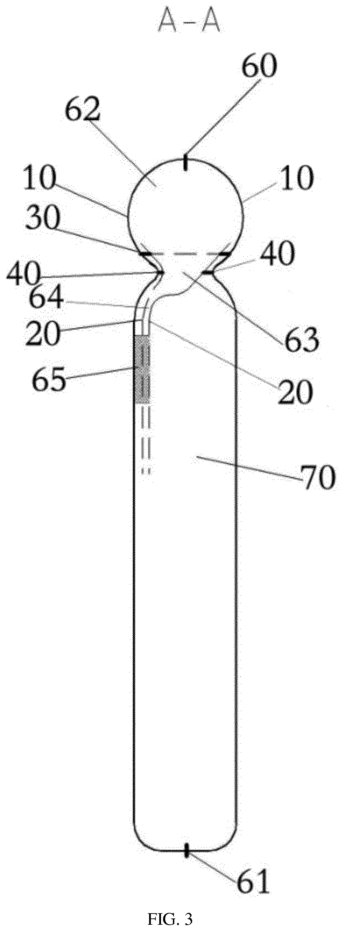

Please see FIGs. 2-3, an inflatable airbag without a heat-resisting layer comprises two cavity films 10 and two valve films 20, wherein the boundaries of the cavity films 10 are sealed; the two valve films 20 are arranged between the two cavity films 10, and no heat-resisting layer is arranged between the valve films 20; first heat-seal lines 30 are arranged at the top ends of the valve films 20, the valve films 20 and the adjacent cavity films 10 are glued together through the first heat-seal lines 30, and the two valve films 20 are not glued together; second heat-seal lines 40 are further arranged on the cavity films 10, and the second heat-seal lines 40 comprise disconnected areas 41 and heat-pressing areas 42 which are arranged alternately; in the heat-pressing areas 42 of the second heat-seal lines 40, the two valve films and two cavity films are completely glued together; in the disconnected areas 41 of the second heat-seal lines 40, the two valve films 20 and the adjacent cavity films 10 are glued together in a heat-seal mode correspondingly, and the two valve films 20 are not glued together; an inflation channel 62 is formed by the portions, from the second heat-seal lines 40 to the top ends, of the cavity films 10, and a bag body is formed by the portions, from the second heat-seal lines 40 to the bottom ends, of the cavity films 10; in the disconnected areas of the second heat-seal lines 40, air inlets 63 leading to the bag body from the inflation channel 62 are formed between the two valve films 20; an inflation inlet 67 is formed in the inflation channel 62, and air enters the inflation channel 62 from the inflation inlet 67 during inflation.

The second heat-seal lines 40 are parallel to the first heat-seal lines 30. Third heat-seal lines 50 are arranged on the bag body and divide the bag body into a plurality of small cavities 70. Each small cavity 70 at least comprises one disconnected area 41. In the present embodiment, the second heat-seal lines 40 are located below the first heat-seal lines 30, or the positions of the second heat-seal lines 40 and positions of the first heat-seal lines 30 can overlap on the films in other embodiment.

Extension parts 68 which protrude out of the first heat-seal lines 30 are arranged at the top ends of the two valve films 20 correspondingly and provided with extension pressing marks 69, and the valve films 20 and the adjacent cavity films 10 are glued together through the extension pressing marks 69. The extension pressing marks 69 can be various patterns, can be continuous patterns, can also be designed into discontinuous patterns, and can be brand LOGOs, and both attractiveness and a publicity effect are achieved. The extension pressing marks 69 can be connected with the first heat-seal lines 30 and can also not be connected with the first heat-seal lines 30. When the extension parts 68 are quite short, the extension pressing marks 69 can be omitted.

In other embodiments, extension parts 68 which protrude out of the first heat-seal lines 30 are arranged at the top ends of the two valve films 20 correspondingly, the height of the extension part 68 of one valve film 20 is small than the width of the air inlets 63 during inflation. In this way, the inflation channel 62 can expand during inflation to open the air inlets 63, and air can enter the small cavities 70 from air inlet channels 64 smoothly.

In the present embodiment, the heat-pressing areas of the second heat-seal lines are continuous straight lines correspondingly, and in other embodiments, the heat-pressing areas of the second heat-seal lines can be designed into irregular patterns according to requirements.

Heat-bonding pressing marks 65 are arranged in the bag body, and the two valve films 20 and one cavity film 10 are glued together partially through the heat-bonding pressing marks 65.

In the manufacturing process of the inflatable airbag, the first heat-seal lines 30 are arranged, so that one valve film 20 and one cavity film 10 are glued together; then the discontinuous second heat-seal lines 40 are arranged, so that the air inlets 63 are formed between the two valve films 20 in the disconnected areas 41 of the second heat-seal lines 40, and the air inlets 63 lead to the bag body from the inflation channel 62.

The top ends of the two cavity films 10 are glued together through a top heat-seal line 60, the bottoms of the two cavity films 10 are glued together through a bottom heat-seal line 61, and the inflation channel 62 is formed by the portions from the second heat-seal lines 40 to the top heat-seal line 60. The air inlets 63 located in the disconnected areas 41 of the second heat-seal lines 40 lead to the bag body from the inflation channel 62, and when the inflation channel 62 is inflated, air can enter the bag body through the air inlets 63.

In the present embodiment, the first heat-seal lines 30 are parallel to the edges of the top ends of the cavity films 10, and the first heat-seal lines 30 are continuous heat-pressing mark lines, so that air in the bag body cannot leak out from the inflation channel 62 after the bag body is inflated. In the embodiment, heat-bonding pressing marks 65 are further applied to the cavity films 10, and the two valve films 20 in the small cavities 70 and one cavity film 10 are glued together partially through the heat-bonding pressing marks 65.

The third heat-seal lines 50 are applied to the vertical direction of the cavity films 10 and divide the bag body into the multiple strip-shaped small cavities 70, and the small cavities 70 are mutually independent and sealed; when one small cavity 70 leaks air, other small cavities 70 are not affected, and thus the stable buffering effect of the whole airbag is guaranteed.

In the present embodiment, for a convenient and clear description, the height positions of the first heat-seal lines 30 do not overlap with the height positions of the second heat-seal lines 40 on the films; in other embodiments, the positions of the first heat-seal lines 30 can overlap with the positions of the second heat-seal lines 40. In the present embodiment, the edges of the top ends of the cavity films 10, the first heat-seal lines 30 and the second heat-seal lines 40 are in parallel, so that the heights of the small cavities 70 are consistent, and pressure can be averagely shared by the small cavities 70.

The second heat-seal lines 40 are discontinuous heat-seal lines and comprises disconnected areas 41 and heat-pressing areas 42; the disconnected areas 41 are disconnected portions of the second heat-seal lines 40, and since the two valve films 20 are not glued together in the disconnected areas 41, air can flow through the disconnected areas 41 during inflation. The heat-pressing areas 42 are heat-pressing mark portions of the second heat-seal lines 40, and the two valve films and two cavity films are glued together in the heat-pressing areas 42, so that an airtight space is formed, and air cannot leak out. In the present embodiment, the heat-pressing areas 42 intersect and partially overlap with the third heat-seal lines 50, and each small cavity 70 comprises one of the disconnected areas 41 of the second heat-seal lines 40.

During inflation, air enters the inflation channel 62 from the inflation inlet 67, after the inflation channel 62 expands, the two cavity films 10 are stretched open, the two valve films 20 are pulled open due to the first heat-seal lines 30, the air inlets 63 between the two valve films 20 are opened, and air enters the small cavities 70; when the small cavities 70 are full of air, air in the small cavities 70 squeezes the two valve films 20, the inflation channel 64 is made to contract until the two valve films 20 in the small cavities 70 are squeezed to be completed attached, air cannot enter the small cavities 70 anymore, and thus inflation and sealing are completed.

A manufacturing method for an inflatable airbag without a heat-resisting layer comprises the following steps that:
S1, two cavity films 10 and two valve films 20 which are shorter than the cavity films 10 are prepared; one cavity film is attached to one valve film, the other cavity film is attached to the other valve film, first heat-seal lines 30 are applied to the top ends of the valve films, and top end boundaries of the valve films 20 and the cavity films 10 are glued together through the first heat-seal lines 30;
S2, the two cavity films 10 glued with the valve films 20 from step S1 are attached, the two valve films 20 are located between the two cavity films 10, heat-seal lines are then applied to boundaries of the two cavity films 10, so that the boundaries of the two cavity films 10 are glued together to form an airtight space, and an inflation inlet 67 is reserved in the top boundaries of the two cavity films 10;
S3, discontinuous second heat-seal lines 40 are applied to the areas of the valve films 20, and the second heat-seal lines 40 comprise disconnected areas 41 and heat-pressing areas 42 which are arranged alternately; in the heat-pressing areas 42 of the second heat-seal lines 40, the two valve films and two cavity films are completely glued together; in the disconnected areas 41 of the second heat-seal lines 40, the two valve films 20 and the adjacent cavity films 10 are glued together in a heat-seal mode correspondingly, and the two valve films 20 are not glued together; an inflation channel 62 is formed by the portions, above the second heat-seal lines 40, of the two cavity films 10, and air enters the inflation channel 62 from the inflation inlet 67 during inflation; a bag body is formed by the portions of the two cavity films 10 below the second heat-seal lines 40; in the disconnected areas 41 of the second heat-seal lines 40, air inlets 63 leading to the bag body from the inflation channel 62 are formed between the two valve films 20.

A one-time forming heat-pressing die is used when the second heat-seal lines are applied to the step S3, and the heat-pressing die is provided with male die bodies which are arranged at intervals in a protruding mode. The positions of the male die bodies correspond to the positions of the heat-pressing areas 42, and thus the second heat-seal lines meeting requirements can be machined at a time during machining.

According to the manufacturing method for the inflatable airbag, the valve films and the adjacent cavity films are glued together firstly through the first heat-seal lines, then the air inlets are formed in the bag body through the discontinuous second heat-seal lines, the step of coating a heat-resisting layer in the prior art is avoided, and manufacturing is more efficient and faster.

The manufacturing method of the invention for an inflatable airbag without a heat-resisting layer is not limited to the above implementation steps, and modifications and transformations which are made based on the inventive concept that the first heat-seal lines and the second heat-seal lines are combined to avoid coating of the heat-resisting layer of the invention are also within the protection scope of the invention, for example, the manufacturing method for an inflatable airbag without a heat-resisting layer of the invention can also comprise the following steps that:
S1, two cavity films 10 and two valve films 20 which are shorter than the cavity films 10 are prepared; one cavity film is attached to one valve film, the other cavity film is attached to the other valve film, first heat-seal lines 30 are applied to the top ends of the valve films, and top end boundaries of the valve films 20 and the cavity films 10 are glued together through the first heat-seal lines 30; heat marks are applied to the lower ends of the valve films, and the two valve films and one cavity film are glued together partially through the heat marks;
S2, the cavity films 10 glued with the valve films 20 from step S1 are attached, and the two valve films 20 are located between the two cavity films 10; discontinuous second heat-seal lines 40 are applied to the areas of the valve films 20, and the second heat-seal lines 40 comprise disconnected areas 41 and heat-pressing areas 42 which are arranged alternately; in the heat-pressing areas 42 of the second heat-seal lines 40, the two valve films and two cavity films are completely glued together; in the disconnected areas 41 of the second heat-seal lines 40, the two valve films 20 and the adjacent cavity films 10 are glued together in a heat-seal mode correspondingly, and the two valve films 20 are not glued together; an inflation channel 62 is formed by the portions, above the second heat-seal lines 40, of the two cavity films 10, and a bag body is formed by the portions of the two cavity films 10 below the second heat-seal lines 40; in the disconnected areas 41 of the second heat-seal lines 40, air inlets 63 leading to the bag body from the inflation channel 62 are formed between the two valve films 20;
S3, heat-seal lines are applied to boundaries of the two cavity films 10, so that the boundaries of the two cavity films 10 are glued together to form an airtight space, an inflation inlet 67 is reserved in the top boundaries of the two cavity films 10, and air enters the inflation channel 62 from the inflation inlet 67 during inflation.

The inflatable airbag of the invention has the following advantages that:
1. Since the heat-resisting layer does not need to be printed, color code checking is not needed during production, and production is easier.
2. Since the heat-resisting layer does not need to be printed, pollution of materials of the heat-resisting layer to the environment is reduced, and the airbag is more environmentally friendly.
3. Since the heat-resisting layer does not need to be printed, the influence of stretching of the valve films on the heat-resisting layer when the heat-resisting layer is printed on the valve films does not need to be considered anymore, and thus problems caused by printing of the ink heat-resisting layer are solved.
4.Since the heat-resisting layer does not need to be printed, equipment for printing the heat-resisting layer is omitted, and production efficiency is greatly improved.
5. Since the heat-resisting layer does not need to be printed, point alignment and accurate position alignment for printing are avoided, and high-precision manufacturing equipment is not needed.
6. Since the heat-resisting layer does not need to be printed, the product is simpler, and a better visual effect is achieved.
7. Since the heat-resisting layer does not need to be printed, the step of coating the heat-resisting layer is omitted, production procedures are simplified, and the cost of gas packaging is reduced.
8.Since the heat-resisting layer does not need to be printed, the product is simpler, and promotion and industrial application and popularization are facilitated.
9.The air inlets of the inflation channel are in an open state so that air can enter conveniently, inflation and air intake are easier, and labor intensity is relieved.
10.The problem where the product is scrapped due to position errors of the heat-resisting layer is solved, and inflation efficiency is higher.

According to the inflatable airbag of the invention, materials of the ink heat-resisting layer in the prior art are not needed, cost is reduced, and meanwhile, the problem where the airbag is scrapped due to position deviation of heat-seal points is solved; after the heat-resisting layer is omitted, pollution to the environment is reduced, the valve films do not need to be coated with the heat-resisting layer, the problem where the heat-resisting layer deforms due to stretching of the films does not need to be considered, and production efficiency is greatly improved.

### Second Embodiment

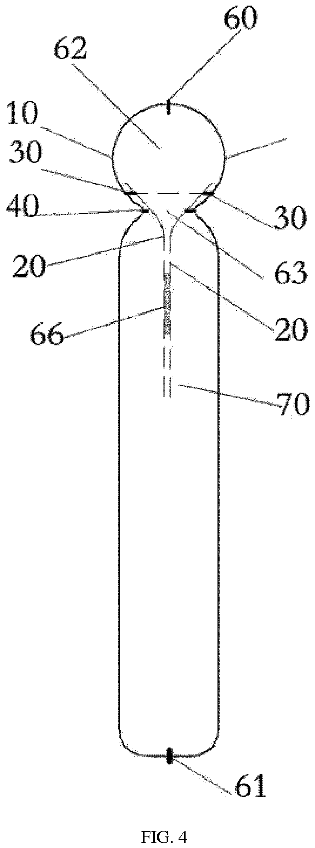

Please see FIG 4, in the embodiment, the two valve films 20 in the small cavities 70 and the cavity films 10 are not glued together, the air inlet channels 64 are narrowed only through heat-pressing mark areas 66, and thus air leakage is avoided. The embodiment is the same as the first embodiment in other aspects.

### Third Embodiment

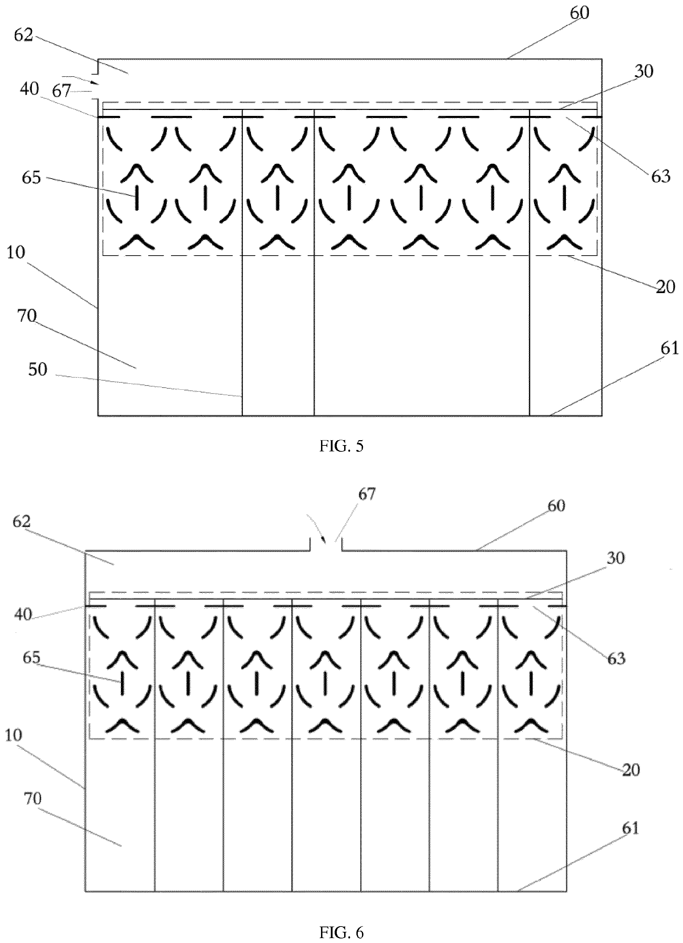

Please see FIG 5, in the embodiment, the distances between the adjacent third heat-seal lines 50 are not equal, so that the sizes of the small cavities 70 are different, and accordingly the small cavities 70 can better adapt to contours of different products and better achieve a buffering effect. The embodiment is the same as the first embodiment in other aspects.

### Fourth Embodiment

Please see FIG 6, the inflation inlet 67 is formed in the top, so that inflation can be conducted conveniently. The embodiment is the same as the first embodiment in other aspects.

### Fifth Embodiment

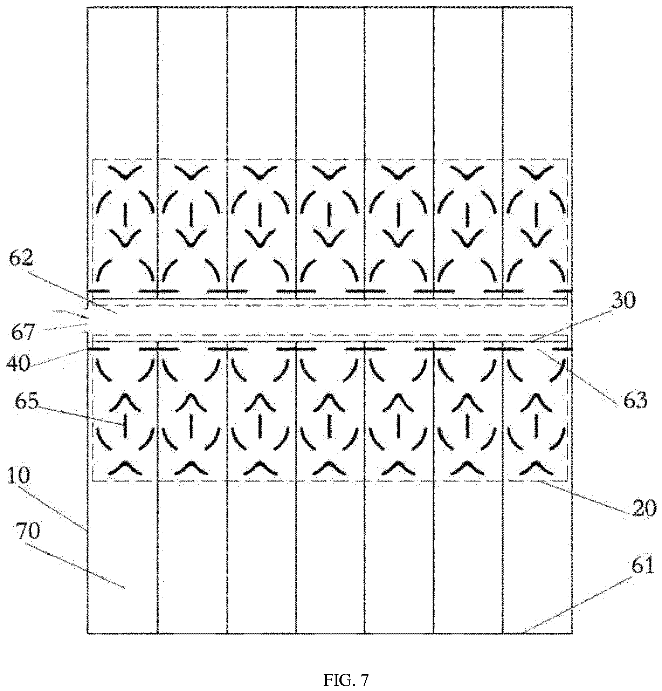

Please see FIG 7, in the embodiment, the two sides of the inflation channels 62 of two inflatable airbags are communicating to each other in order to form a larger inflatable airbag. The embodiment is the same as the first embodiment in other aspects.

### Sixth Embodiment

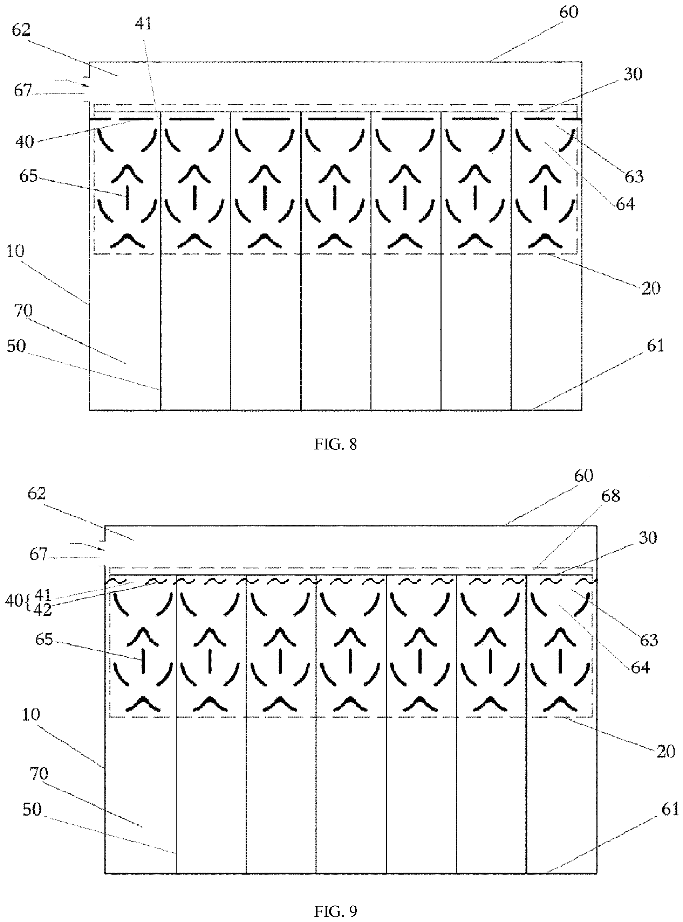

Please see FIG 8, in the embodiment, each of the disconnected areas 41 of the second heat-seal lines 40 stretches across two adjacent small cavities 70, and thus the air inlets 63 are adjusted to be close to the third heat-seal lines 50.

### Seventh Embodiment

Please see FIG 9, in the embodiment, each of the heat-pressing areas 42 of the second heat-seal lines 40 is a wavy line, and the embodiment is the same as the first embodiment in other aspects. In other embodiments, the heat-pressing areas 42 can be in different shapes and can also be different patterns.

The invention is not limited to the above embodiments and has the intention to include various modifications or transformations which do not deviate from the spirit and scope of the invention and belong to the claims and equivalent technique scope of the invention.

## Claims

1. A manufacturing method for an inflatable airbag without a heat-resisting layer, **characterized by** comprising the following steps that:
S1, two cavity films and two valve films which are shorter than the cavity films are prepared; one cavity film is attached to one valve film, the other cavity film is attached to the other valve film, first heat-seal lines are applied to top ends of the valve films, and top end boundaries of the valve films and the cavity films are glued together through the first heat-seal lines;
S2, the two cavity films glued with the valve films from step S1 are attached, the two valve films are located between the two cavity films, heat-seal lines are then applied to the boundaries of the two cavity films, so that the boundaries of the two cavity films are glued together to form an airtight space, and an inflation inlet is reserved in the top boundaries of the two cavity films;
S3, discontinuous second heat-seal lines are applied to the areas of the valve films, and the second heat-seal lines comprise disconnected areas and heat-pressing areas which are arranged alternately; in the heat-pressing areas of the second heat-seal lines, the two valve films and two cavity films are completely glued together; in the disconnected areas of the second heat-seal lines, the two valve films and the adjacent cavity films are glued together in a heat-seal mode correspondingly, and the two valve films are not glued together; an inflation channel is formed by portions of the two cavity films above the second heat-seal lines, and air enters the inflation channel from the inflation inlet during inflation; a bag body is formed by portions of the two cavity films below the second heat-seal lines; in the disconnected areas of the second heat-seal lines, air inlets leading into the bag body from the inflation channel are formed between the two valve films.

2. The manufacturing method for an inflatable airbag without a heat-resisting layer according to Claim 1, **characterized in that** the first heat-seal lines are two continuous heat-seal pressing marks, the valve films and the adjacent cavity films are continuously glued together in a heat-seal mode correspondingly through the first heat-seal lines, and the valve films are not glued together.

3. The manufacturing method for an inflatable airbag without a heat-resisting layer according to Claim 2, **characterized in that** heat-bonding pressing marks are applied to the bag body, and the two valve films and one cavity film are glued together partially through the heat-bonding pressing marks.

4. The manufacturing method for an inflatable airbag without a heat-resisting layer according to Claim 3, **characterized in that** third heat-seal lines are applied to the bag body in the vertical direction of the cavity films and divide the bag body into a plurality of small cavities.

5. The manufacturing method for an inflatable airbag without a heat-resisting layer according to Claim 4, **characterized in that** the third heat-seal lines intersect with the heat-pressing areas of the second heat seal lines, and each small cavity at least comprises one of the disconnected areas of the second heat-seal lines.

6. The manufacturing method for an inflatable airbag without a heat-resisting layer according to Claim 5, **characterized in that** extension parts which protrude out of the first heat-seal lines are arranged at the top ends of the two valve films correspondingly, extension pressing marks are applied to the extension parts, the valve films and the adjacent cavity films are glued together through the extension pressing marks, and the valve films are not glued together.

7. The manufacturing method for an inflatable airbag without a heat-resisting layer according to Claim 5, **characterized in that** the extension parts which protrude out of the first heat-seal lines are arranged at the top ends of the two valve films correspondingly, and the height of the extension part of one valve film is smaller than the width of the air inlets during inflation.

8. A manufacturing method for an inflatable airbag without a heat-resisting layer **characterized by** comprising the following steps that:
S1, two cavity films and two valve films which are shorter than the cavity films are prepared; one cavity film is attached to one valve film, the other cavity film is attached to the other valve film, first heat-seal lines are applied to top ends of the valve films, and top end boundaries of the valve films and the cavity films are glued together through the first heat-seal lines; heat marks are applied to lower ends of the valve films, and the two valve films and one cavity film are glued together partially through the heat marks;
S2, the cavity films glued with the valve films from step S1 are attached, and the two valve films are located between the two cavity films; discontinuous second heat-seal lines are applied to the areas of the valve films, and the second heat-seal lines comprise disconnected areas and heat-pressing areas which are arranged alternately; in the heat-pressing areas of the second heat-seal lines, the two valve films and two cavity films are completely glued together; in the disconnected areas of the second heat-seal lines, the two valve films and the adjacent cavity films are glued together in a heat-seal mode correspondingly, and the two valve films are not glued together; an inflation channel is formed by portions of the two cavity films above the second heat-seal lines, and a bag body is formed by portions of the two cavity films below the second heat-seal lines; in the disconnected areas of the second heat-seal lines, air inlets leading to the bag body from the inflation channel are formed between the two valve films;
S3, heat-seal lines are applied to boundaries of the two cavity films, so that the boundaries of the two cavity films are glued together to form an airtight space, an inflation inlet is reserved in the top boundaries of the two cavity films, and air enters the inflation channel from the inflation inlet during inflation.

9. An inflatable airbag without a heat-resisting layer, **characterized in that**:
the inflatable airbag comprises two cavity films, wherein the boundaries of the two cavity films are glued together to form an airtight space, and an inflation inlet is reserved in the top boundaries of the two cavity films;
the inflatable airbag further comprises two valve films which are arranged between the two cavity films, wherein the valve films are shorter than the cavity films, and no heat-resisting layer is arranged between the two valve films;
first heat-seal lines are arranged at top ends of the valve films; the valve films and the adjacent cavity films are glued together through the first heat-seal lines, and the two valve films are not glued together;
the inflatable airbag further comprises second heat-seal lines, wherein the second heat-seal lines comprise disconnected areas and heat-pressing areas which are arranged alternately; in the heat-pressing areas of the second heat-seal lines, the two valve films and two cavity films are completely glued together; in the disconnected areas of the second heat-seal lines, the two valve films and the adjacent cavity films are glued together in a heat-seal mode correspondingly, and the two valve films are not glued together;
an inflation channel is formed by portions of the two cavity films above the second heat-seal lines, and air enters the inflation channel from the inflation inlet during inflation; a bag body is formed by portions of the two cavity films below the second heat-seal lines;
in the disconnected areas of the second heat-seal lines, air inlets leading to the bag body from the inflation channel are formed between the two valve films.

10. The inflatable airbag without a heat-resisting layer according to Claim 9, **characterized in that** the first heat-seal lines are two continuous heat-seal pressing marks, the valve films and the adjacent cavity films are continuously glued together in a heat-seal mode correspondingly through the first heat-seal lines, and the valve films are not glued together.

11. The inflatable airbag without a heat-resisting layer according to Claim 10, **characterized in that** heat-bonding pressing marks are arranged in the bag body, and the two valve films and one cavity film are glued together partially through the heat-bonding pressing marks.

12. The inflatable airbag without a heat-resisting layer according to Claim 11, **characterized in that** third heat-seal lines are arranged on the bag body and divide the bag body into a plurality of small cavities in the vertical direction of the cavity films.

13. The inflatable airbag without a heat-resisting layer according to Claim 12, **characterized in that** the third heat-seal lines intersect with the heat-pressing areas of the second heat-seal lines, and each small cavity at least comprises one of the disconnected areas of the second heat-seal lines.

14. The inflatable airbag without a heat-resisting layer according to Claim 13, **characterized in that** extension parts which protrude out of the first heat-seal lines are arranged at the top ends of the two valve films correspondingly and provided with extension pressing marks, the valve films and the adjacent cavity films are glued together through the extension pressing marks, and the valve films are not glued together.

15. The inflatable airbag without a heat-resisting layer according to Claim 13, **characterized in that** the extension parts which protrude out of the first heat-seal lines are arranged at the top ends of the two valve films correspondingly, and the height of the extension part of one valve film is smaller than the width of the air inlets during inflation.
